# EUROPEAN PATENT APPLICATION

(11) **EP 4 173 998 A1**
(43) Date of publication of application: **03.05.2023**
(21) Application number: 21205729.3
(22) Date of filing: 29.10.2021
(51) Int. Cl.: B65G 17/32, B65G 17/48, B65G 47/86

(54) **DEVICE AND APPARATUS FOR CONVEYING OBJECTS**

(71) Applicant: Tonejet Limited, Royston, Hertfordshire SG8 6EE (GB)
(72) Inventor: HILLS, Scott Jordan, Royston, SG8 6EE (GB); INGHAM, Ian Philip Butler, Royston, SG8 6EE (GB)
(74) Representative: Gill Jennings & Every LLP

(57) **Abstract**

A device for conveying objects retained thereby, comprising: a main body for receiving thereon an object to be conveyed, the main body being adapted for attachment to a conveying means configured to convey the object along a conveying path; and a pair of opposing jaws mounted to the main body, the pair of jaws comprising a first jaw and a second jaw configured to releasably retain the object therebetween so as to retain the object on the main body; wherein at least the first jaw is arranged to be movable relative to the second jaw between an open position, in which an object received on the main body is not retained by the pair of jaws, and a closed position, in which the pair of jaws retain the object; and wherein at least the first jaw is releasably biased towards the closed position by releasable biasing means.

## Description

### Field

The present invention relates to a device and apparatus for conveying objects, which may form part of a larger apparatus or system in which such objects are handled or processed. The objects to be conveyed may be necked and flanged beverage cans having an outer surface decoration, for example.

### Background

When handling or manipulating objects within an industrial process, it is often desirable to minimise contact with the object to avoid the risk of damaging part of the object, such as its surface. While there are many industrial processes in which objects are handled and manipulated, an industry in which this is particularly important is the printing industry, in which automated printing systems may be implemented to handle, and decorate the surface of, many objects at a high run-rate or throughput.

When the outer surface of an object has been printed on (or "decorated"), it is very important to avoid contact with that decorated surface, especially when handling the object immediately after the surface decoration has been applied, for example before the object is subsequently dried or baked in an oven.

An example of such an industrial printing system for objects is a digital printing system for the direct decoration of beverage cans, whereby decoration can be applied to the outer surface (i.e. wall) of beverage cans as quickly as one or more object per second, with appropriately rapid handling of those decorated objects therefore being required. In such a system, individually decorated beverage cans need to be moved from a printing apparatus, where their surfaces are decorated, to an oven where the surface decoration is dried and/or baked.

Such beverage cans (i.e. "objects") may be necked and flanged beverage cans (such configuration being well-known in the industry), with an opening at one end for introducing the contents at a later time, which may be part of a separate process.

An example of an industrial process that would benefit from such a device and apparatus is the digital printing of cylindrical objects such as beverage cans using the apparatuses and methods described in WO2018/083164, WO2018/083167, WO2018/083163 and WO2018/083162. Described therein is a printing system comprising a plurality of carrying devices for carrying objects to be printed on, the carrying devices each comprising a rotatable handling device configured to hold and rotate an object. A track defines a path along which each of the plurality of carrying devices are moved and a plurality of processing stations are arranged along the track and comprise at least one printing station. Each printed object is typically coated with a thermally curable overprint varnish before reaching an unload station at which the object is ejected from the rotatable handling device onto a suction cup, which holds the unprinted base of the object while pivoting it downwards whereupon the object is released onto a first conveyor for exiting the machine and transferred to a second conveyor for conveying to a separate oven to cure the overprint varnish.

Transferring an object from the first conveyor to the second conveyor typically involves a reorientation of the object through 180 degrees. Known methods comprise a slip guide feature at the end of the first conveyor, through which the objects are retained on the conveyor by maintaining a slidable contact between the most upstanding part of the object (e.g. the base of an upturned can) and a curved outer guide surface positioned at a fixed distance from the curved conveyor (i.e. positioned concentrically at a constant radial distance) to prevent the object dropping from the conveyor as it turns. At the end of the 180 degree turn the outer guide surface ends, allowing the object to drop from the first conveyor on to the second conveyor. However, such slips guides do not function satisfactorily with objects having a high aspect ratio, e.g. a tall and/or or slim beverage can, and perform poorly at controlling the landing position of the object on the second conveyor. Furthermore, the dimensions of the curved outer guide surface define the size and shape of the object that can be conveyed, providing no flexibility in the selection of objects.

More generally, it is often necessary to change the orientation of objects between one process and another between which objects are conveyed, for example to invert an object that was upside down following one process to being upright prior to the next process, or vice versa. Conveyors that incorporate a twist or turn to provide a change of orientation therefore need to incorporate a means to retain the objects being conveyed. A further example to the slip guide described above is a vacuum conveyor belt, which retains an object on a perforated belt by suction; however, vacuum conveyors consume energy to retain objects throughout their conveying path as they operate by the pumping of considerable amounts of air, and consequently are bulky, noisy and have a high power consumption. Alternatively, magnetic conveyor belts may be used but these are only suitable for conveying magnetic objects.

An improved device and apparatus for conveying objects within an industrial system and process, which overcomes one or more of the disadvantages described above, is therefore highly desirable.

### Summary of invention

According to a first aspect there is provided a[n object holding] device for conveying an object retained thereby, the device comprising: a main body for receiving thereon an object to be conveyed, the main body being adapted for attachment to a conveying means configured to convey the object along a conveying path; and a pair of opposing jaws mounted to the main body, the pair of jaws comprising a first jaw and a second jaw configured to releasably retain the object therebetween so as to retain the object on the main body; wherein at least the first jaw is arranged to be movable relative to the second jaw between an open position, in which an object received (or resting) on the main body is not retained by the pair of jaws, and a closed position, in which the pair of jaws retain the object; and wherein at least the first jaw is releasably biased towards the closed position by releasable biasing means.

At least the first jaw may be arranged to be movable relative to the second jaw in a linear direction. At least the first jaw may arranged to be movable such that it is slidable relative to the second jaw. The pair of jaws may be arranged such that the first jaw and second jaw retain the object at substantially the same time in the closed position.

The objects may be configured as hollow containers comprising an opening at which the rim or flange is formed, for example above a "necked" portion (e.g. a "neck") of the container that is narrower (e.g. has a smaller diameter) than another (or the remaining) portion of the container. The objects may be cylindrical and/or tubular. The objects may be cylindrical cans, for example necked and flanged beverage cans.

The pair of jaws may be configured to retain on the main body an object having a rim or flange by engaging (i.e. moving to the closed position around, and thereby retaining) the object such that said rim or flange of the object rests on the main body between the pair of jaws and the main body. In this way, the jaws may be said to retain the object beneath said rim or flange of the object, where the term "beneath" is intended to mean relative to the remainder (e.g. a body) of the object, i.e. such that the jaws retain the object between the rim or flange of the object and the body of the object. The pair of jaws may be mounted on the main body with a gap between the pair of jaws and the main body such that the pair of jaws retain the rim or flange of the object within the gap without a clamping force being applied by the jaws to the object.

The gap between the pair of jaws and the main body may be at least 0.5 mm. Preferably, the gap is between 0.5 mm and 1.0 mm, but it may be greater than 1.0 mm in order to accommodate an object having a rim or flange having a thickness greater than 1.0 mm.

Furthermore, the range of movement of at least the first jaw may be limited by an end-stop that sets the spacing between the jaws in the closed position. This spacing between the jaws in the closed position may be configured to be greater than the width of the neck of the retained object directly beneath the rim or flange, so that the jaws do not press against the retained object in the closed position. The device may therefore be configured to retain the object such that it is retained by the device without the jaws exerting a force, such as a clamping force, directly on the object.

Additionally, or alternatively, the pair of jaws may be configured such that, in the closed position, the spacing between the jaws is (slightly) greater than the width or diameter of a retained object such that the pair of jaws retain the object therebetween without a clamping force being applied by the jaws onto the retained object, i.e. the jaws do not press against the retained object, in the closed position. For example, if the object to be conveyed has a necked portion (e.g. a "neck"), then the spacing between the jaws in the closed position will be configured to be greater than the width or diameter of the neck of the object so that the jaws do not press against the retained object when in the closed position.

The object may therefore have limited movement relative to the main body of the device while retained therein, for example a cylindrical object may potentially be rotatable relative to the main body of the device while retained between the jaws.

The releasable biasing means may comprise a first magnet located on at least the first jaw, and a second magnet located on the main body of the device, said first and second magnets arranged such that there is a magnetic attraction between the first and second magnets that releasably biases at least the first jaw towards the second magnet (i.e. towards the closed position). The first and second magnets may be arranged such that they have opposing faces with opposing magnetic poles, for example the face of the first magnet may be a north magnetic pole and the opposing face of the second magnet may be a south magnetic pole, and vice versa. The first and second magnets may be permanent magnets. At least the first jaw may be biased away from the second jaw (i.e. towards the open position) by applying a magnetic force greater than the magnetic force that attracts the first and second magnets together.

The device may further comprise a mounting element configured to receive the object, the mounting element being mounted on the main body between the pair of jaws such that an object received by the mounting element is retained between the pair of jaws when they are in the closed position.

The mounting element may be removably mountable onto the main body, for example via a screw thread coupling or a bayonet coupling, or any other suitable coupling that will retain the mounting element in position when mounted to the main body. The mounting element may be slidably mounted to the main body such that it can move relative to at least the second jaw. The mounting element may be biased towards a first position on the main body, whereby it can be caused to move towards the second jaw into a second position, by movement of the first jaw towards the closed position, and to return to the first position by movement of the first jaw towards the open position. The mounting element may be interchangeable with another mounting element of a different size and/or shape. The mounting element may be configured as an insert arranged to fit within an opening of an object whereby to receive the object thereon. A fluid conduit may be arranged to pass through the main body and, optionally also the mounting element when provided, through which air can be blown to help release the object from the device when appropriate.

The device may further comprise at least one shaft onto which at least the first jaw is slidably mounted via one or more support bearings, said at least one shaft being captive within the main body such that it is free to move within one or more bores that each extend at least partially through the main body. The at least one shaft may thereby act as a floating shaft, for example the bore(s) may have a diameter greater than the diameter of the at least one shaft such that the at least one shaft can move freely or "float" with the (oversized) bores in the main body whereby to allow free motion of the jaw(s) with little or no binding. The at least one shaft may be captive within the main body in that it is not retained by support bearings in the main body, for example. The at least one shaft may comprise two or more such shafts, for example a pair of shafts.

The second jaw may be arranged to be movable relative to the first jaw. As such, any of the features described above and herein relating to the at least first jaw may also relate to the second jaw. Thus, the second jaw may be arranged to be movable relative to the first jaw in a linear direction along a common axis shared by the first and second jaws. The first and second jaws may be mounted in an opposed configuration such that they face each other, wherein the open position corresponds to the jaws being furthest apart and the closed position corresponds to the jaws being closest together. The second jaw may be releasably biased towards the closed position by releasable biasing means similar to the releasable biasing means that biases the first jaw into the closed position. The pair of jaws may be arranged such that the first jaw and second jaw slidably retain the object at substantially the same time in the closed position. The first and second jaws may both be slidably mounted onto the at least one shaft, i.e. such that the shaft is common to the pair of jaws.

According to another aspect there is provided an apparatus, comprising a device as described above and herein; and conveying means configured to convey the device along a conveying path, wherein the conveying means is adapted to have releasably attached thereto one or more of said devices. The apparatus may comprise a plurality of said devices attached to the conveying means in a spaced-apart configuration having a predetermined pitch. The device(s) may be orientated with respect to the conveying means such that the sliding motion of the movable jaw(s) is side-to-side, and more preferably such that the sliding motion of the movable jaw(s) is substantially perpendicular to the direction of motion of the conveying means. The conveying means may be a belt or a segmented belt or a track.

The conveying means may be configured to change the orientation of the device, and with it the retained object, as it is conveyed along the conveying path. The object may have a first orientation at a first position along the conveying path, and a second different orientation at a second position along the conveying path. The first orientation of the object may be vertically upwards and the second orientation of the object may be vertically downwards, for example wherein the object is rotated 180 degrees along the conveying path (i.e. as it is conveyed along the conveying path). The conveying means may also be configured to orientate the object substantially horizontally, for example to allow the object to be inspected. Indeed, the conveying means could be configured to orientate the object in many different orientations, if desired. The conveying means may be configured to move the device(s) intermittently.

The apparatus may further comprise a third magnet positioned along the conveying path, the third magnet being configured to interact magnetically with the first magnet of at least the first jaw when the device is within a predetermined proximity of the third magnet. The third magnet may be a permanent magnet. Alternatively, the third magnet may be an electromagnet that is controllable to attract or repel the first magnet on at least the first jaw by controlling the direction of electrical current in the electromagnet. The third magnet may be configured to attract the first magnet with a magnetic force configured to be greater than the magnetic force attracting the first magnet and the second magnet together, thereby causing at least the first jaw to move to the open position when the device is in said proximity of the third magnet. The third magnet may be configured to repel the first magnet when the device is in said proximity of the third magnet whereby to apply an additional magnetic force to at least the first jaw to urge it towards the closed position when in the proximity of the third magnet.

The first and second jaws may both be movable with magnetic releasable biasing means, wherein the third magnet may comprise a pair of electromagnets, positioned one on each side of the conveyor path at a stationary location, such that when the device is in the proximity of the third magnets, the respective first magnets of the first and second jaws of the device are in alignment with the third magnets.

The apparatus may further comprise a loading station positioned along the conveying path, at which an object is loaded onto the device such that it is received by the device with at least the first jaw in the open position and retained thereon by movement of at least the first jaw to the closed position; and an unloading station positioned further along the conveying path, at which the object is unloaded from the device by movement of at least the first jaw from the closed position to the open position. At the loading station, the device may be arranged to receive the object being loaded from above. At the unloading station, the device may be arranged to release the object being unloaded in a downwards direction.

The loading station and the unloading station may each comprise (further) electromagnets each side of the conveying path that are controllable to attract or repel the first magnet on at least the first jaw.

A seating station may further be provided along the conveying path, preferably just downstream of the loading station, before the unloading station, comprising at least one further electromagnet that is controllable to attract the first magnet of at least the first jaw temporarily to move at least the first jaw into the open position, to allow the object to re-seat on the main body, before being controlled to allow at least the first jaw to return to the closed position, and optionally further to repel the first magnet on at least the first jaw. This can help to ensure that the object is seated correctly on the device and retained between the jaws to ensure the object is held securely during subsequent conveying and such that when released it drops perpendicularly to facilitate a safe and repeatable landing of the object, for example onto a further conveying means (e.g. conveyor belt). The seating station may be controlled to operate while the conveying means is temporarily paused, for example during the stationary phases of an intermittent motion conveyor.

Each or any of the loading station, the seating station and the unloading station may be repeated along the conveying path. The electromagnet(s) at a given station, particularly an unloading station, may be controlled to actuate the device at that station or not, according to whether it is desired to load, seat or unload an object respectively at that station.

According to another aspect there is provided a method of using the apparatus disclosed herein, comprising: at the loading station, stopping movement of the conveying means, energising the electromagnets of the loading station to open the jaws, receiving an object to be conveyed onto the device, and, before the conveying means starts to move the device out of the loading station, energising the electromagnets to close the jaws.

According to another aspect there is provided a method of using the apparatus disclosed herein, comprising, at the unloading station, stopping movement of the conveying means and delaying energising of the electromagnets of the unloading station to allow a settling time for the object to come to rest, after which settling time the electromagnets of the unloading station are energised to open the jaws, thereby releasing the object from the device.

According to another aspect there is provided a computer program product encoding 3D printing instructions to manufacture, using a 3D printer, the device described above and herein. The device may be 3D printed using any suitable 3D printing technique, such as selective laser sintering (SLS) printing.

It will be understood by a skilled person that any apparatus feature described herein may be provided as a method feature, and vice versa. It will also be understood that particular combinations of the various features described and defined in any aspects described herein can be implemented and/or supplied and/or used independently.

Moreover, it will be understood that the present invention is described herein purely by way of example, and modifications of detail can be made within the scope of the invention. Furthermore, as used herein, any "means plus function" features may be expressed alternatively in terms of their corresponding structure.

### Brief description of the figures

An embodiment of the present disclosure will now be described in greater detail, by way of example only, and with reference to the accompanying drawings, in which:
Figures 1A and 1B show a perspective view and an end view, respectively, of a device according to the present invention.
Figures 2A and 2B are side views of the device showing it in a closed configuration and an open configuration, respectively.
Figures 3A and 3B are plan views of the device showing it in the closed configuration and the open configuration, respectively.
Figure 4A shows a perspective view of an object suitable for use with the device;
and Figures 4B and 4C show side views of the device with the object mounted thereon, with the device shown in the open configuration and closed configuration, respectively.
Figure 5A shows a pair of jaws forming part of the device; Figure 5B shows the jaws mounted to a pair of shafts forming part of the device; and Figure 5C shows a perspective view of the main body of the device with the jaws and shafts removed.
Figures 6A and 6B show a side view and an underside view of the device, respectively, illustrating the jaws mounted to the shafts within the main body of the device.
Figure 7 shows a perspective view of an apparatus according to the present invention, comprising a plurality of the devices mounted to a conveying means.
Figures 8A to 8C show means for attaching the device to a conveying means.
Figures 9A to 9C show the means for attaching the device of Figures 8A to 8C being integrated with the device.
Figure 10 shows a side view of the apparatus of Figure 7.
Figure 11 shows the apparatus arranged to release individually conveyed objects onto a further conveying means.
Figure 12 shows a side view of the apparatus arranged to release plural conveyed objects simultaneously onto a further conveying means.

### Detailed description

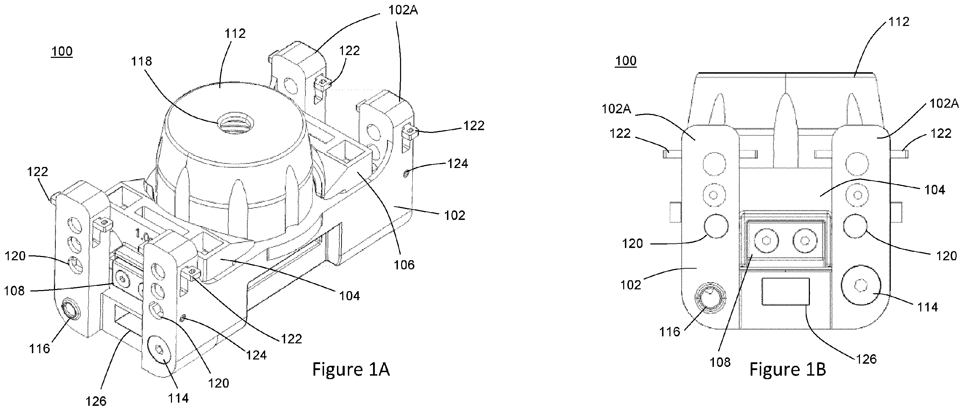

A device for conveying objects 100 according to the present invention is shown in Figures 1A and 1B. The device 100 (which may also be described as an "object holder" or "object holding device") comprises a main body 102 arranged to receive an object (not shown) thereon.

The main body 102 comprises a generally rectangular cuboid from which a central portion is partially removed (from an upper surface thereof) to leave a vertical upstanding portion 102A (or "arm") at each corner, i.e. a pair of spaced apart portions 102A at each end (i.e. opposing ends) of the main body 102. Part of the main body 102 is also removed between each pair of upstanding portions 102A at either end, extending the height of the main body 102, such that the upstanding portions102A form the outermost parts of the main body 102 at either end. The main body 102 is adapted for attachment to a conveying means (not shown) configured to convey the object along a conveying path, as will be discussed further on.

A first jaw 104 and a second jaw 106 are arranged in an opposed configuration, at either end of the main body 102, to form a pair of jaws 104, 106. In this embodiment, both of the jaws 104, 106 are movable relative to the main body 102 such that they can be controlled to releasably retain therebetween an object received on the main body 102 so as to retain the object on the main body 102.

Furthermore, the jaws 104, 106 are movable relative to each other, in a direction towards and away from each other, across the main body 102. In this way, the jaws 104, 106 are arranged to be movable between an open position, in which an object received on the main body 102 is not retained by the jaws 104, 106, and a closed position, in which the jaws 104, 106 retain the object. Ideally, the jaws 104, 106 are arranged such that the first jaw 104 and the second jaw 106 retain an object received on the main body 102 at substantially the same time in the closed position.

In other words, the jaws 104, 106 are mounted to the main body 102 in an opposed configuration such that they face each other, wherein the open position corresponds to the jaws 104, 106 being furthest apart and the closed position corresponds to the jaws 104, 106 being closest together. In Figure 1, the jaws 104, 106 are shown in the closed position.

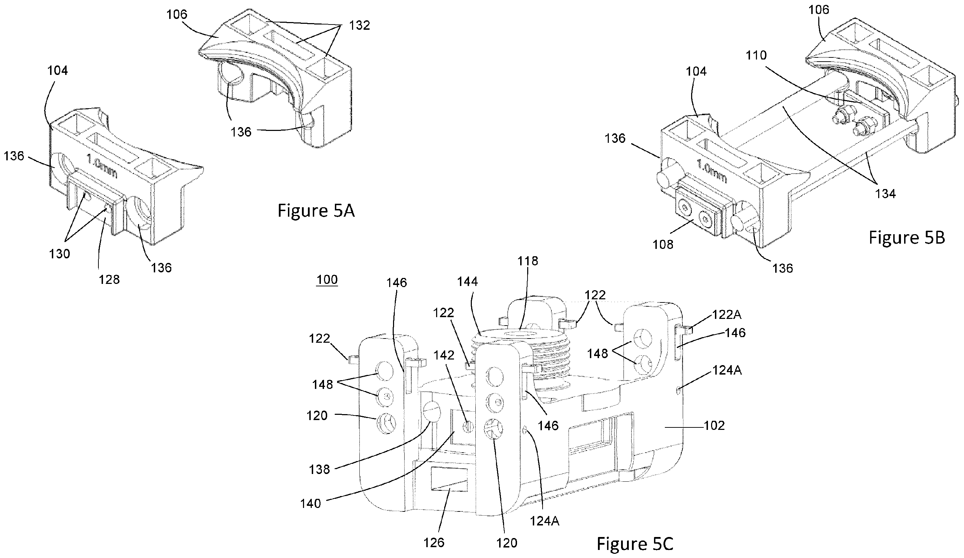

The jaws 104, 106 are releasably biased towards the closed position by releasable biasing means. In this embodiment, the releasable biasing means are provided by a first magnet 108 mounted to each of the jaws 104, 106, each first magnet 108 being arranged in an opposing configuration with a second magnet 110 (visible in Figure 5B) having an opposite magnetic pole that is mounted to the main body 102, i.e. at positions between the pair of jaws 104, 106. The first and second magnets may be permanent magnets.

The first magnets 108 and second magnets 110 are therefore arranged such that a magnetic attraction exists between them that biases each first magnet 108 (and hence the movable jaw 104, 106 to which it is mounted) towards its corresponding opposed second magnet 110. More specifically, as mentioned above, the first magnets 108 and second magnets 110 can be arranged such that they have opposing faces with opposing magnetic poles, for example the faces of the first magnets 108 that oppose the second magnets 110 may have a north magnetic pole and the opposing faces of the second magnets 110 may have a south magnetic pole, and vice versa.

Due to the second magnets 110 being positioned on the main body 102 between the jaws 104, 106, the jaws 104, 106 are thereby magnetically biased towards each other, and hence towards the closed position. The jaws are releasably biased towards the closed position because the magnetic attractive force that exists between the first magnet 108 and second magnet 110 can be overcome by a stronger magnetic force, as will be discussed further on.

In this embodiment, the pair of jaws 104, 106 are movable relative to one another in a linear direction. Hence, the jaws 104, 106 may also be described as being slidable across the main body 102. In an alternative embodiment (not shown) only one of the pair of jaws 104, 106 may be configured to move relative to the other one, which non-movable jaw 106, 104 may therefore be fixedly mounted to the main body 102. In a further alternative embodiment (not shown), one or each of the pair of jaws 104, 106 may not move in a linear direction, e.g. along a common axis. For example, the or each jaw 104, 106 may be pivotally mounted to the main body 102 such that they are arranged to pivot relative to the main body 102. Thus, the or each jaw 104, 106 would move along an arcuate or curved path whereby to move between the open and closed positions. The releasable biasing means described herein would be adapted accordingly to bias the jaws 104, 106 to the closed position.

In this embodiment, a mounting element 112 is provided on the main body 102, onto which an object may be mounted, in use. The mounting element 112 is mounted on the main body 102 between the jaws 104, 106 such that an object received by the mounting element 112 is retained between the jaws 104, 106 when biased towards the closed position.

In an alternate embodiment, in which only the first jaw 104 is configured to be movable towards the second jaw 106, the mounting element 112 may be slidably mounted to the main body 102 such that it can also move relative to the second jaw 106. As such, the mounting element 112 may be movably biased towards a first position on the main body 102, but can be caused to move towards the second jaw 106 into a second position, by movement of the first jaw 104 towards the closed position, and can then return to the first position by movement of the first jaw 104 towards the open position.

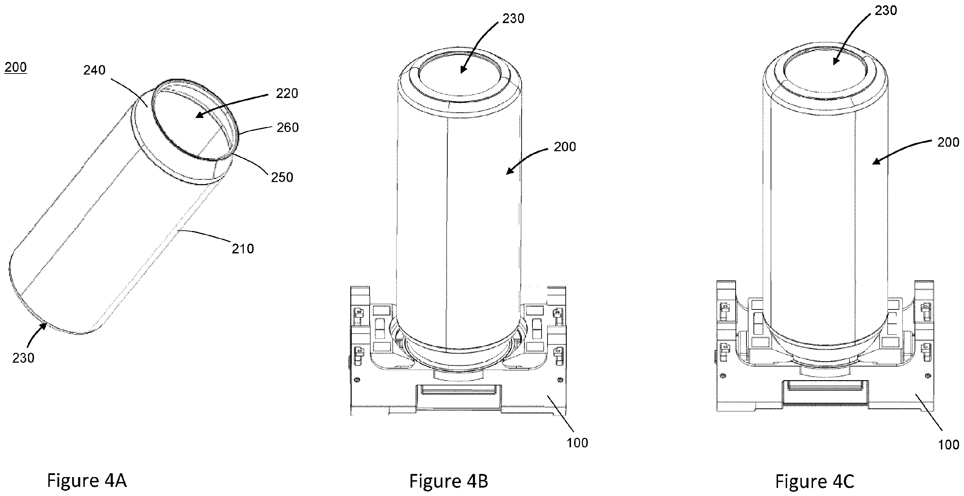

The object may be configured as a hollow container comprising an opening at which the rim or flange is formed, preferably wherein the object is cylindrical and/or tubular. Such an object may be an empty necked and flanged beverage can 200, i.e. prior to it being filled, an example of which is illustrated in Figure 4A.

In this example, the object 200 (i.e. a necked beverage can) comprises a hollow cylindrical body 210 having an upper ("first") end forming an opening (or "open end") 220. A second ("lower") end of the cylindrical body 210 is closed, thereby forming a base 230 that the object 200 can rest on. The cylindrical body 210 has a necked portion (or "neck") 240, adjacent the opening 220, where the cylindrical body 210 narrows (or tapers) inwards such that the necked portion 240 is more narrow (i.e. such that it has a reduced diameter) than the remainder of the cylindrical body 210. A rim 250 is formed at the opening 220. The rim 250 is arranged to protrude very slightly outwardly in a generally radial direction to form a flange 260 to which a lid (not shown) may subsequently be crimped to close or seal the object 200. The neck 240 of the object 200 may thus be described herein as being located beneath the rim 250 of the object 200. Such objects 200 (i.e. beverage cans) are well-known.

When the object 200 is a beverage can, similar to what is shown in Figure 4A and described above, the mounting element 112 may be configured as an insert arranged to fit within the opening of the object 200 whereby to receive the object 200 onto the mounting element 112.

A fluid conduit (not visible here) may be provided for air (or other gas) to be blown through, to help release an object, such as a beverage can, from the mounting element 112. The conduit may be arranged to pass through the main body 102, and optionally also through the mounting element when provided. Here, such a conduit is provided having a fluid inlet 116 in an end of the main body 102 and a fluid outlet 118 on the upper surface mounting element 112 through which a gas can be blown.

A proximity feature (or "element") 114 may also be provided in the main body 102 for allowing the position of the main body 102 to be determined by a sensor along a conveying path, as will be discussed further on.

A rectangular slot 126 extends longitudinally through the main body 102, between the (opposed) ends having the upstanding portions 102A, for mounting the device 100 to a conveying means, as will also be discussed in more detail further on.

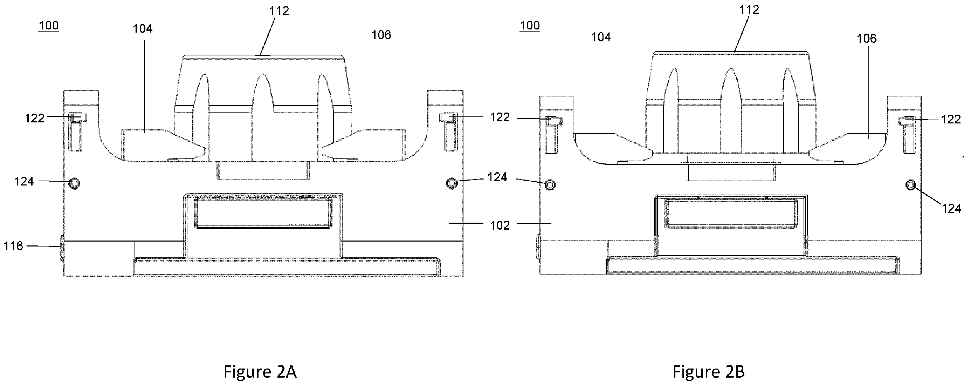

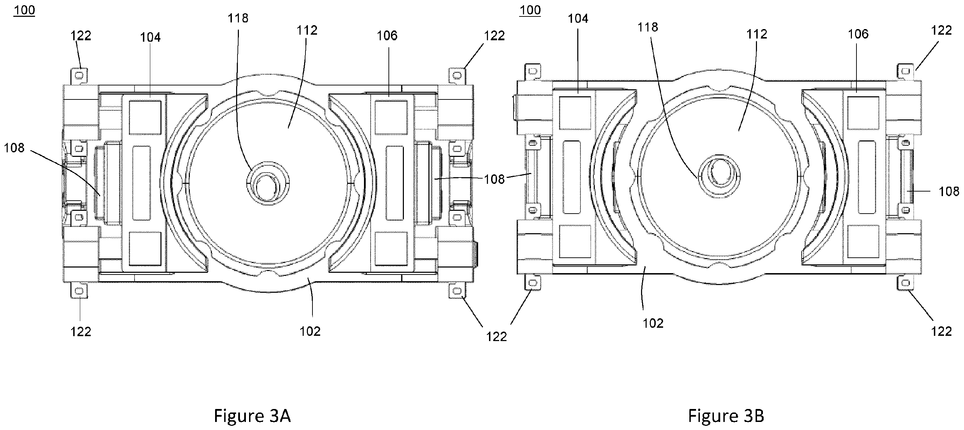

Figures 2A and 2B show side views of the device 100 with the jaws 104, 106 biased towards the closed position (Figure 2A), and moved towards the open position (Figure 2B), respectively. Similarly, Figures 3A and 3B show plan views of the device 100 with the jaws 104, 106 biased towards the closed position (Figure 3A), and moved towards the open position (Figure 3B), respectively.

As mentioned above, Figure 4A shows an example of an object 200 suitable for use with the device 100 of the present embodiment in the form of a necked beverage can, which is empty prior to being filled. Figure 4B shows the object 200 being received on the main body 102 of the device 100, whereby the jaws 104, 106 have been moved towards the open position to allow the open end 220 of the object 200 to be received by the mounting element (not visible) on the main body 102 such that it is mounted thereon. Figure 4C shows the jaws 104, 106 biased towards the closed position, such that the jaws 104, 106 retain the object 200 on the main body 102 and hence the device 100.

As can be seen in Figures 4B and 4C, the jaws 104, 106 are configured to retain such an object 200, i.e. an object having a flange (or "rim"), on the main body 102 by engaging the object 200 beneath the flange such that the object is retained between the jaws 104, 106 and the main body 102 (i.e. underneath the jaws 104, 106). In this embodiment, the jaws 104, 106 are mounted on the main body 102 with a gap of at least 0.5 mm between the jaws 104, 106 and the main body 102. For the object 200 shown (i.e. a necked and flanged beverage can), the gap is preferably between 0.5 mm and 1.0 mm. However, the gap may be greater than 1.0 mm in order to accommodate a different object having a rim or flange having a thickness greater than 1.0 mm, for example.

Furthermore, the closed position of the jaws 104, 106 is defined by contact of the jaws 104, 106 with the main body 102, which thereby provides an end-stop to the closing movement of each jaw 104, 106 that prevents the jaws 104, 106 pressing directly on the object 200 in the closed position.

The jaws 104, 106 can thereby retain (i.e. secure) the object within the gap without a clamping force being applied by the jaws directly onto the object 200.

The jaws 104, 106 are shown removed from the main body 102 in Figure 5A. A recess 128 for mounting the first magnet 108 to each jaw 104, 106 can be seen on the outer side of the first jaw 104. The inner sides of each jaw 104, 106 oppose one another when mounted to the main body 102. Thus, the first magnets 108 effectively push each jaw 104, 106 towards the closed position due to the magnetic attraction between the first magnets 108 mounted to the jaws 104, 106 and the second magnets 110 (visible in Figure 5B) mounted to the main body 102. Screw holes 130 are provided for securing the first magnet 108 to each jaw 104, 106 via suitable screw means. Further recesses 132 are provided in the jaws 104, 106 to reduce the amount of material used, and hence the weight of the jaws 104, 106 to allow them to be moved more easily.

The jaws 104, 106 are movably mounted to a pair of shafts 134 via holes 136 provided in the jaws 104, 106, as shown in Figure 5B. The holes 136 for the shafts 134 are spaced apart in the jaws 104, 106 on either side of the recess 128 provided for the first magnet 108. The holes 136 in the jaws 104, 106 are spaced apart the same distance on each jaw 104, 106 to allow the shafts 134 to which they are mounted to be arranged in a parallel configuration.

Figure 5C shows a pair of holes 120 provided in the main body 102 at either end of the main body 102, on either side of a recess 140 provided in the main body 102 for mounting the second magnets 110 thereto, the pair of holes 120 being provided for introducing the shafts 134 into the main body 102. In addition, a pair of bore holes 138 pass through the main body 102, which the shafts 134 pass through. The bore holes 138 are arranged to be parallel to ensure that the shafts 134 are substantially parallel within the main body 102, as mentioned above, whereby to provide ease of movement of the jaws 104, 106.

In this way, the jaws 104, 106 can be slidably mounted to the shafts 134, preferably via one or more support bearings (not shown). Furthermore, the shafts 134 are ideally arranged to be captive within the main body 102 within the bore holes 138 that extend through the main body 102 such that the shafts 134 are free to move within the bore holes 138 that extend through the main body 102. For example, the bore holes 138 that extend through the main body 102 may be configured to have a diameter greater than the diameter of the shafts 134, such that the shafts 134 can move freely or "float" with the (oversized) bore holes 138 through the main body 102, whereby to allow free motion of the jaws 104, 106 with little or no binding. As such, the shafts 134 may be described as (e.g. acting as) "floating shafts".

As also shown in Figure 5C, the mounting element 112 may be configured to be screwed onto the main body 102 via a screw thread coupling 144 such that it is removable and can thereby easily be replaced or interchanged for another mounting element having a different configuration (e.g. size or shape). A bayonet coupling, or any other suitable coupling that will retain the mounting element 112 in position when mounted to the main body 102 may also be used.

The device may be 3D-printed, for example by selective laser sintering (SLS) printing. This offers several advantages, not least a significant cost saving over machining such a device. An additional advantage of 3D printing the device is that it is possible to form the device having captive elements, such as the captive gates 122 that are formed within each of the upstanding portions of the main body 102.

The gates 122 are arranged to slide (e.g. vertically) within slots 146 that pass through the holes 120 in the upstanding portions of the main body 102 (i.e. through which the shafts 134 are introduced into the main body 102). Moreover, the gates 122 are arranged to substantially close off the holes 120 in the upstanding portions at the ends of the main body 102 whereby to contain the shafts 134 within their respective bore holes 138 such that they are still free to move, i.e. "float", as previously described. The slots 146 each extend the entire width of their respective upstanding portion in the main body 102. The gates 122 each have one or more tabs 122Athat extend outwardly from the slots to allow the gates 122 to be held and thereby moved within its slot 146.

One or more further holes 148 may be provided in each of the upstanding portions at the ends of the main body 102, above the holes 120 for introducing the shafts 134 into the bore holes 138, and adjacent the slots 146 within which the gates 122 are free to slide. The further holes 148 may be advantageous if the device is manufactured by 3D selective laser sintering (SLS) printing, to facilitate powder removal and prevent potential over-sintering during the SLS printing process to ensure the gates 122 do not bind during manufacture.

Grub screws 124 may be provided in corresponding screw holes 124A in the sides of the main body 102, aligned with the slots 146 in which the gates 122 are free to slide, such that the grub screws 124 can be tightened to retain the gates 122 in a closed position whereby they contain the shafts 134 within their respective bore holes 138. Hence, grub screws 124 do not clamp the shafts 134 directly, allowing the shafts 134 to float.

The opposed configuration of the first magnets 108 and the second magnets 110 is also further illustrated in Figures 5B and 5C. Although the main body 102 has been removed in Figure 5B to show the shafts 134, the relative position of the first magnets 108 and each corresponding second magnet 110 will nonetheless be readily understood. As mentioned above, similar to the recesses 128 provided in the jaws 104, 106 for the first magnets 108, recesses 140 are provided in the main body 102 for mounting the second magnets 110 thereto. Screw holes 142 are provided for securing the second magnets 110 to the main body 102 via suitable screw means.

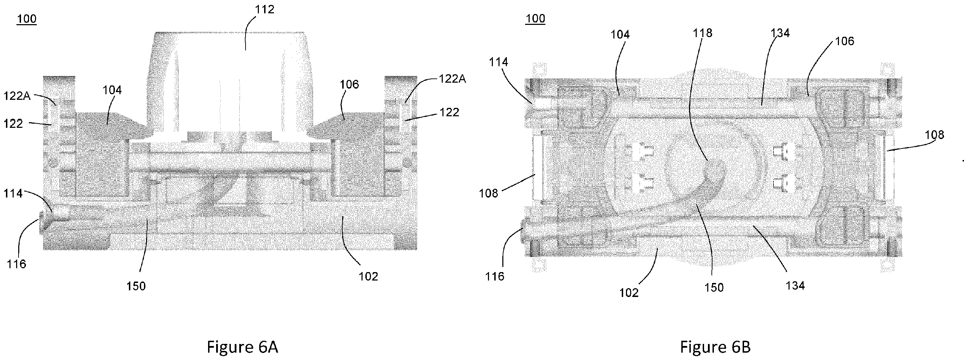

The opposed configuration of the first magnets 108 and the second magnets 110, and also the relative positions of the magnets 108, 110 within the device 100, including where the second magnets 110 are mounted to the main body 102, can also be seen in Figures 6A and 6B, where the main body 102 is shown transparent.

Figures 6A and 6B also illustrate further how the shafts 134 are mounted within their respective bore holes 138 that extend through the main body 102. The conduit 150 that passes through the main body 102, extending from the fluid inlet 116 located in an end of the main body 102 to the fluid outlet located in the mounting element 112, can also be seen, as can the proximity feature 114 that can be incorporated into the main body 102 of the device 100.

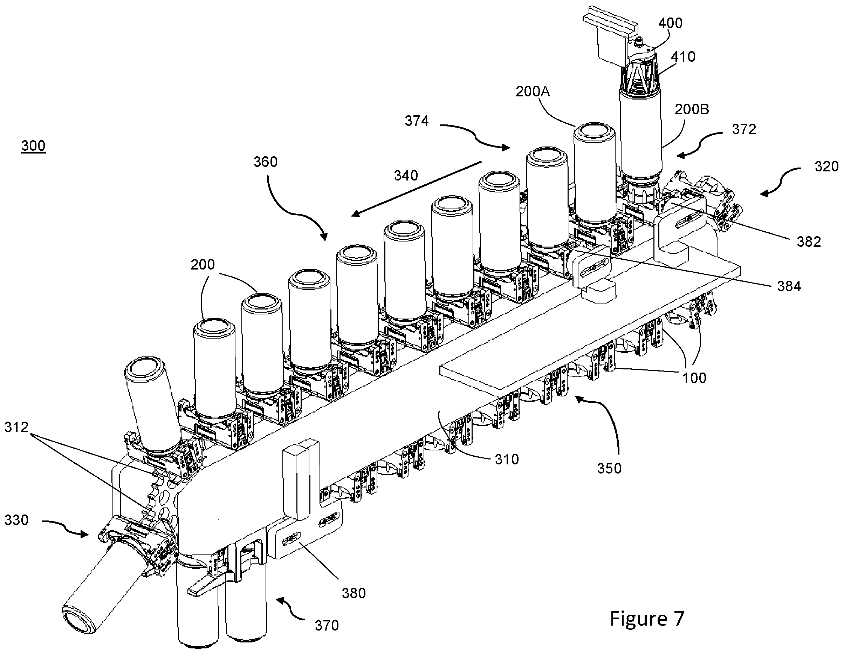

Figure 7 shows an apparatus 300 for conveying objects 200 according to the present invention, in which a plurality of devices 100, such as the one described above, are mounted to a conveying means 310. In this embodiment, the conveying means 310 is a segment conveyor, which may be thought of as a continuous conveyor, similar to a "looped" conveyor belt, the type of which is well known to a skilled person. The segment conveyor 310 may also be described as a "segmented belt" or "segmented track", for example.

The segment conveyor 310 has a plurality of individual segments 312, each having mounted thereon a device 100. The segments 312, and hence devices 100, are typically spaced apart along the segment conveyor 310 with a pre-determined pitch. The apparatus 300 therefore includes a segment conveyor 310 having a plurality of devices 100 attached thereto in a spaced-apart configuration having a predetermined pitch.

The devices 100 are orientated with respect to the segment conveyor such that the "side-to-side" movement of the jaws 104, 106 of each device 100 is substantially perpendicular to the direction of motion of the conveying means.

Some of the devices 100 can be seen to be retaining an object 200 in the form of an empty necked and flanged beverage can. At a first end 320 of the segment conveyor 310, at a loading station 372, an object loader 400 is arranged to load objects 200 onto the devices 100. Here, the device receives the object being loaded from above it. The object loader 400 may be part of a separate apparatus (not shown) and is simply illustrated and mentioned here to provide context. For example, the object loader 400 may comprise a vacuum suction cup 410 that can retain an object 200 (i.e. a beverage can in this example) by its base 230 by applying suction to the base 230 of the object 200 while the object loader 400 moves it between positions.

In this way, for example, the object loader 400 can move (e.g. by rotating through 90 degrees) the object 200 from a first position (e.g. in which the object 200 is removed from a mandrel (not shown) of a printing apparatus) to a second position, shown in Figure 7, in which the vacuum suction can be removed to allow the object 200 to drop a small distance onto the device 100.

In this embodiment, as the object 200 is a beverage can, the device 100 includes a mounting element 112 shaped to receive the open end 220 of the object 200 such that the mounting element 112 is effectively inserted into the object 200 (e.g. the mounting element 112 acts as an "insert") when received on the main body 102 of the device 100.

The segment conveyor 310 can then be driven (e.g. rotated) to move the object 200 retained by a device 100 along a conveying path 340. The segment conveyor 310 may be configured to move the devices 100 intermittently. Once a first object 200A has been loaded onto a device 100, the segment conveyor can be driven to move that first object 200A a sufficient distance along the conveying path 340 to allow the next device 100 on the segment conveyor 310 to be moved into position for the object loader 400 to load a second object 200B onto it. This process can be continued to load a plurality of objects 200 onto the segment conveyor 310.

In this example, the object loader 400 operates at a speed of one can per second, i.e. the object loader 400 offers objects 200 to the segment conveyor 310 at a rate of one can per second and the segment conveyor 310 is controlled to move intermittently at a rate of one can per second. The intermittent motion comprises a movement phase alternating with a stationary phase, the total time of the two phases being 1.0 second. Typically, the movement phase is 0.5 second and the stationary phase is 0.5 second. The skilled person will understand, however, that these timings are not a limitation of a segment conveyor 310 nor of the devices 100 holding the objects and that the conveying process and the operation of the devices 100 described herein may be configured to operate at faster or slower speeds depending on the particular requirements of the application.

As the devices 100 are moved along the conveying path 340, they eventually reach a second, opposite, end 330 of the segment conveyor 310. Here, the devices 100 are driven around the second end 330 of the segment conveyor 310 such that they can return to the first end 320 of the segment conveyor 310, i.e. by being conveyed along an underside 350 of the segment conveyor 310.

As shown in Figure 7, in use, the devices 100 that are moved around the second end 330 of the segment conveyor 310 may be retaining objects 200. Thus, as a device 100 is moved around the second end 330 of the segment conveyor 310, from an upper side 360 of the segment conveyor 310 to the underside 350 of the segment conveyor 310, the object 200 retained by the device 100 is rotated through 180 degrees.

In this way, the conveying means 310 is configured to change the orientation of each device 100, and with it a retained object 200 as it is conveyed along the conveying path 340. While its orientation is changed, the object 200 remains securely retained on the main body 102 of the device 100 by the jaws 104, 106 without any clamping force being directly applied to the object 200.

Thus, the object 200 may have a first orientation at a first position 360 along the conveying path 340, and a second different orientation at a second position 370 along the conveying path 340. The first orientation of the object 200 may be vertically upwards and the second orientation of the object 200 may be vertically downwards, for example wherein the object 200 is rotated 180 degrees as it is conveyed along the conveying path 340.

In this embodiment, the retained objects 200 are released by the devices 100 when they reach an unloading position 370, after being re-orientated through 180 degrees, as will be described further on. However, the objects 200 could potentially also be removed by employing an object unloading device (not shown) similar to the object loading device 400 shown, whereby a similar suction cup could be applied to the base 230 of the object 200 at another position along the conveying path 340 to remove the object 200 from the device 100, such as when the object 200 is at the second end 330 of the segment conveyor 310, for example.

Thus, the apparatus 300 could also be configured to orientate the object 200 substantially horizontally, for example to allow it to be inspected. Indeed, the conveying means 310 could be configured to orientate the object 200 in many different orientations, if desired.

Each device 100 is mounted to an individual segment 312 of the segment conveyor 310. A device 100 is mounted by way of a mounting bar 314 being inserted through the mounting slot 126 that extends through the main body 102 of each device 100, which is then secured to the segment 312.

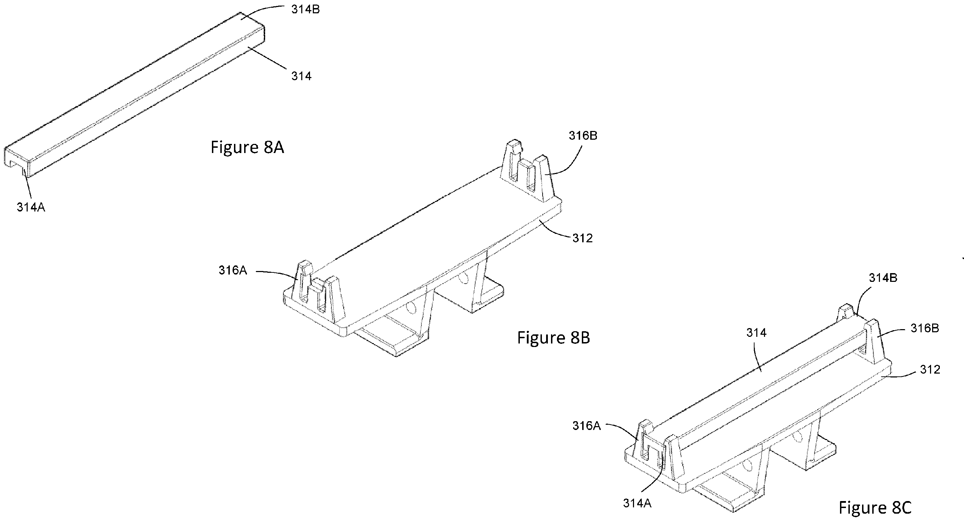

A mounting bar 314 and segment 312 are shown in isolation in Figures 8A and 8B, respectively. Figure 8C shows the segment 312 and mounting bar 314 secured together (without a device 100), whereby opposing ends 314A, 314B of the mounting bar 314 are received by a pair of clips 316A, 316B provided on the segment 312 to secure the mounting bar 314 thereto.

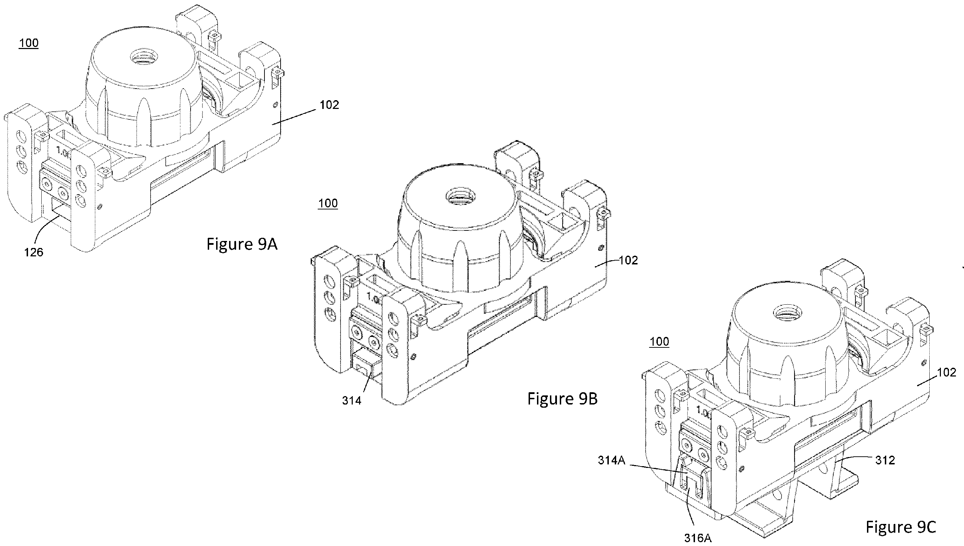

Figure 9A and Figure 9B show a device without a mounting bar 314 inserted in the mounting slot 126, and with a mounting bar 314 inserted in the mounting slot 126, respectively. When inserted in the mounting slot 126 of a device 100, the opposing ends 314A, 314B of the mounting bar 314 protrude slightly from the mounting slot 126 at each end of the main body 102 to allow them to be secured to the corresponding clips 316A, 316B on the segment 312, as shown in Figure 9C. The clips 316A, 316B are typically configured to be releasable. As such, the devices 100 can be releasably attached to the segment conveyor ("conveying means") 310.

The segment 312 may then be secured to the segment conveyor 310, or it may already be part of the segment conveyor 310 when the device 100 is mounted to it. Such an arrangement is well-known to a skilled person and therefore need not be described further here.

In addition to the first magnets 108 and second magnets 110 provided on each device, one or more "third" magnets 380 may be positioned along the conveying path 340. These further magnets 380 may be configured to interact magnetically with the first magnet 108 on each jaw 104, 106 of the device 100 when within a predetermined proximity.

The third magnet 380 may be configured to attract the first magnet 108 with a magnetic force configured to be greater than the magnetic force attracting the first magnets 108 and the second magnets 110 together on the device 100, thereby causing the jaws 104, 106 to move to the open position when the device 100 is in said proximity of the third magnet 380.

Alternatively, the third magnet may be configured to repel the first magnet 108 when the device 100 is in said proximity of the third magnet 380 whereby to apply an additional magnetic force to the jaws 104, 106 to urge them towards the closed position when in the proximity of the third magnet 380.

In the embodiment of the apparatus 300 shown in Figure 7, Figure 10 and Figure 11, the apparatus 300 employs a plurality of devices 100 as described above. A pair of third magnets 380 are therefore provided at the unloading position 370 along the conveying path 340, whereby a third magnet 380 is positioned on either side of the segment conveyor 310 (and hence on either side of the conveying path 340) to interact with each of the first magnets 108 on the jaws 104, 106 of each device.

The third magnets 380 are each configured to provide a greater magnetic attractive force between itself and the first magnet 108 on a respective jaw 104, 106 of the device 100 than the magnetic force between the first magnet 108 and the second magnet 110 mounted on the main body 102 of the device. In this way, the third magnet(s) 380 can cause the jaw(s) 104, 106 of the device to move to the open position, thereby releasing a retained can.

The third magnets 380 are ideally positioned one on each side of the conveyor path 340 at a stationary location, such that when the device 100 is in the proximity of the third magnets 380, the first magnets 108 on the jaws 104, 106 of the device 100 are in alignment with the third magnets 380.

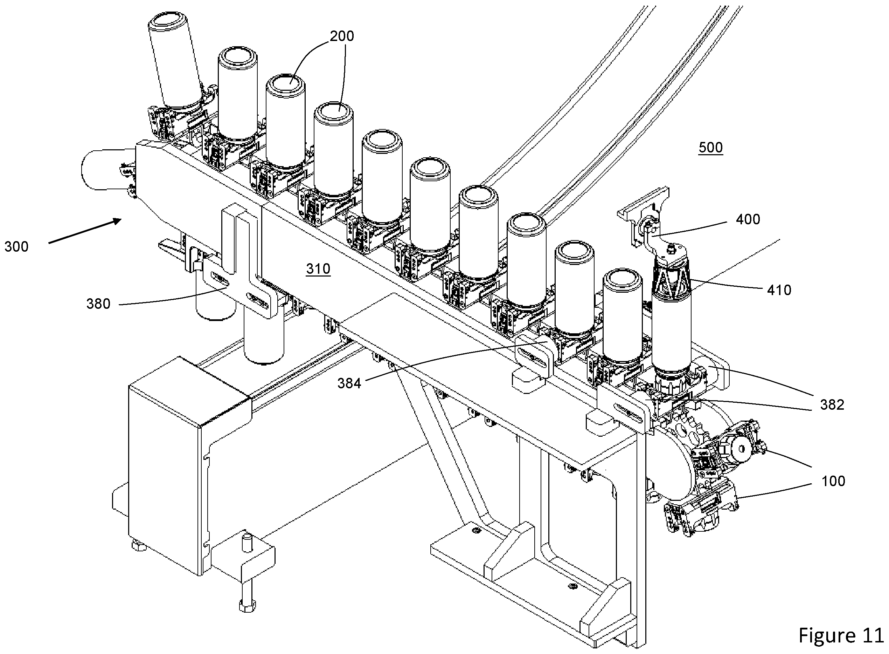

In this way, when a device 100 retaining an object 200 reaches the unloading position 370, the third magnets 380 cause the jaws 104, 106 to move to the open position, thereby releasing the retained object 200 which drops from the device under the force of gravity onto a further conveying means 500, such as illustrated in Figure 11. Thus, the object 200 is unloaded in a downwards direction. The distance that the object is arranged to drop from the device 100 to the further conveying means 500 beneath it is preferably the height of the mounting element 112, which may be between 30 mm to 40 mm, plus around 5 mm to ensure adequate clearance of the object 200 from the device 100, to avoid the device 100 dislodging the object 200 once seated on the further conveying means 500, when the device 100 is moved on by the segment conveyor 310.

While a "vertical" position of the segments 312 of a typical segment conveyor 310 is well controlled while they are located on the upper side 360 of the segment conveyor 310, when located on the underside 350 of the segment conveyor 310, the segments 312 may hang down slightly under the influence of gravity. At locations on the underside 350 of the conveyor where control of the vertical position of the devices 100 needs to be precise, a chain guide may be used.

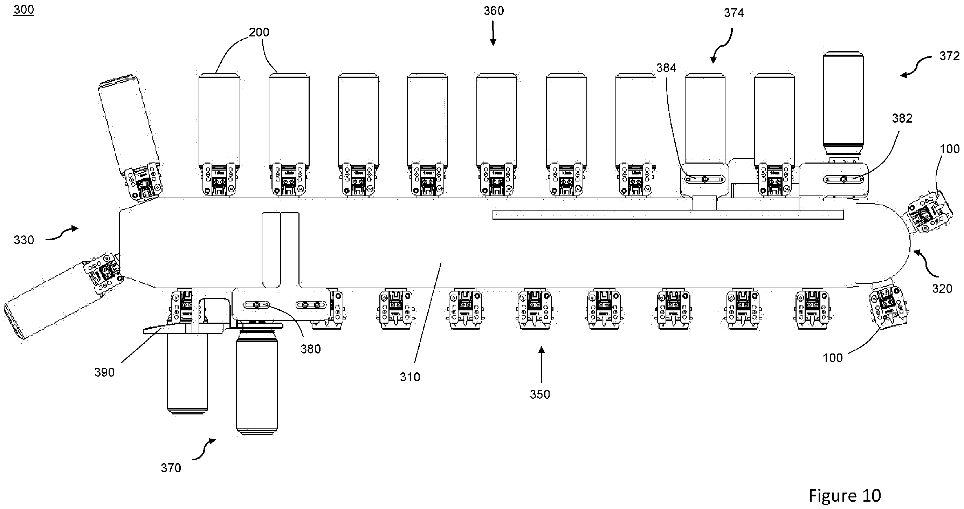

In Figure 10, such a chain guide 390 is provided at the unloading position 370 of the apparatus 300. The chain guide extends towards the second end 330 of the segment conveyor 310, so as to receive objects 200 as they approach the unloading position 370. The chain guide 390 provides a substantially horizontal surface each side of the segment conveyor 310 for receiving thereupon the vertical upstanding portions 102A at each corner of the main body 102 of the device 100, when inverted on the underside 350 of the segment conveyor 310.

In other words, the upstanding portions 102A of the main body 102 of a device 100 all slidably rest upon the surface of the chain guide 390 when the device 100 is in an inverted orientation on the underside 350 of the segment conveyor 310. The chain guide 390 thus supports the weight of the device 100 and the conveyor segment 312 to which it is attached and thereby determines a predictable, repeatable vertical position for the device 100, and with it the object 200, with respect to a further conveying means 500 positioned beneath it at the unloading position 370, as illustrated in Figure 11. Each chain guide 390 has a tapered "lead-in" portion to provide a smooth transition from a state in which a device 100 is suspended from the underside 350 of the segment conveyor 310 to a state in which a device 100 is supported by the chain guide 390.

The third "release" magnet 380 may be a permanent magnet. Alternatively, or additionally, it may comprise an electromagnet to allow more precise control over the timing of the object 200 release. A "release" electromagnet 380 may be positioned on each side of the conveyor path 340 at the unloading position 370.

The more precise control offered by an electromagnet is advantageous to provide a settling time between the device 100 reaching the unloading position 370 and its jaws 104, 106 being opened to release a retained object 200. This settling time gives the object 200 time to come to rest following deceleration of the device 100, which deceleration may cause the object 200 to "wobble" for a short time in the loose grip of the jaws 104, 106. This may otherwise lead to inaccurate placement of the object 200 onto the further conveying means 500. In this example wherein the intermittent motion of the segment conveyor 310 has a period of one second, the time between the segment conveyor 310 being controlled to stop and the "release" electromagnet(s) being energised to open the jaws is typically between 0 and 200 milliseconds, and more preferably between 50 and 100 milliseconds.

A further magnet 382 may be provided at the "loading" station 372 along the conveying path 340 where the objects 200 are initially received by a device 100, for example by way of an object loader 400, as previously described. This further "loading" magnet 382 may be configured similar to the third "release" magnet 380 in that it provides a magnetic force that causes the jaws 104, 106 of a device 100 to move to the open position to allow the object 200 to be received by a device 100. A pair of "loading" magnets 382 may be provided at the loading station 372 along the conveying path 340, with a loading magnet 382 positioned on either side of the conveying path 340 to interact with each of the first magnets 108 on the jaws 104, 106 of each device 100. The loading magnets 382 are ideally positioned one on each side of the conveyor path 340 at the loading station 372 such that, when the device 100 is in the proximity of the loading magnets 382, the first magnets 108 on the jaws 104, 106 of the device 100 are in alignment with the loading magnets 382.

As the device 100 is moved away, along the conveying path 340, the magnetic attractive force provided by the "loading" magnets 382 weakens and the magnetic attractive force between the first magnets 108 and second magnets 110 on the device 100 becomes greater in comparison, causing the jaws 104, 106 to move to the closed position, thereby retaining the object 200 on the device 100.

Again, the further "loading" magnet 382 may be a permanent magnet. Alternatively, or additionally, it may comprise an electromagnet to allow more precise control over the timing of the object 200 loading.

An electromagnet (not shown) can be controllable to attract or repel the first magnets 108 on the jaws 104, 106 by controlling the direction of electrical current in the electromagnet. Both the loading station and the unloading station may therefore each have magnets 380, 382 positioned on each side of the conveying path 340, optionally wherein the magnets 380, 382 are electromagnets that are controllable to attract or repel the first magnet 108 on the jaws 104, 106.

It is important that the object 200 received by a device 100 is correctly seated on the device 100. To be correctly seated means the rim or flange of the object 200 resting on the main body 102 and retained by each jaw 104, 106 in the closed position. If this is not the case, as a result, for example, of an error in loading, the object 200 may be correctly retained only by one jaw 104, 106 and resting atop the other jaw 104, 106, for example, or retained by neither jaw, resting atop both jaws 104, 106 in the closed position after loading.

Incorrect seating of the object 200 may cause it to be retained in an angled position, creating risk of the object 200 colliding with other parts of the system that may be adjacent the conveying path 340, and potentially leading to positioning errors of the object 200, or contact between adjacent objects 200, when unloaded onto a subsequent conveying means 500 at the unloading station 370 further along the conveying path 340. Alternatively, incorrect seating may cause the object 200 not to be retained at all on the device 100, leading to similar errors and likely to cause the object 200 to be dropped when inverted (re-orientated) on the conveying path.

The risk of an object being seated incorrectly on a device may be mitigated by providing a seating station 374 at a position along the conveying path 340, downstream of the loading station 372, before the unloading station 370. The seating station 374 may comprise a further electromagnet 384 either side of the segment conveyor 310 that is controllable to attract the first magnet of the jaws 104, 106 on each device 100 temporarily to move the jaws 104, 106 into the open position. This allows a retained object 200 to re-seat on the main body 102 of the device 100, by the force of gravity acting downwards on the object 200 towards the main body 102, while the segment conveyor 310 is temporarily stopped, for example during the pauses in motion of an intermittent conveyor. The electromagnet 384 can then be controlled to allow the jaws 104, 106 to return to the closed position, and optionally further to repel the first magnets 108 on the jaws 104, 106 to reinforce the magnetic attractive force moving the jaws 104, 106 to the closed position. This further electromagnet 384 can help to ensure that an object 200 is seated correctly on a device 100 such that when later released it drops perpendicularly to facilitate a safe and repeatable landing of the object 200, for example onto a further conveying means (e.g. a conveyor belt) 500, as illustrated in Figure 11.

The electromagnet 384 at the seating station 374 may be energised to move the jaws 104, 106 to the open position for a predetermined period during which the segmented conveyor 310 is paused, and energised to move the jaws 104, 106 to the closed position before the segmented conveyor 310 moves again.

The main body 102 of each device 100 may comprise a proximity feature 114 to allow the position of the main body 102 to be determined by a proximity sensor located along the conveying path 340. The proximity feature 114, which can be seen in Figure 1A comprises a stainless-steel countersunk-head screw located in a corresponding tapped hole in the main body 102 so that its head is substantially flush with the surrounding surface of the main body 102. The proximity feature 114 may thereby be detectable by an inductive proximity sensor (not shown) mounted at a stationary, adjustable location alongside the conveying path 340. The arrangement can provide a detectable "home" position for the segment conveyor 310 at which the devices 100 are in correct alignment with the loading mechanism 400 to receive objects 200 correctly, and with also the magnets at the loading station 372, seating station 374, and unloading station 370. The "homing" process may be performed before each use of the segment conveyor 310 and may comprise controlling the segment conveyor 310 to move slowly until at least two adjacent devices 100 have passed the proximity sensor, providing a controller of the segment conveyor 310 with data of a home position and the spacing (or "pitch") between devices 100 on the conveyor 310.

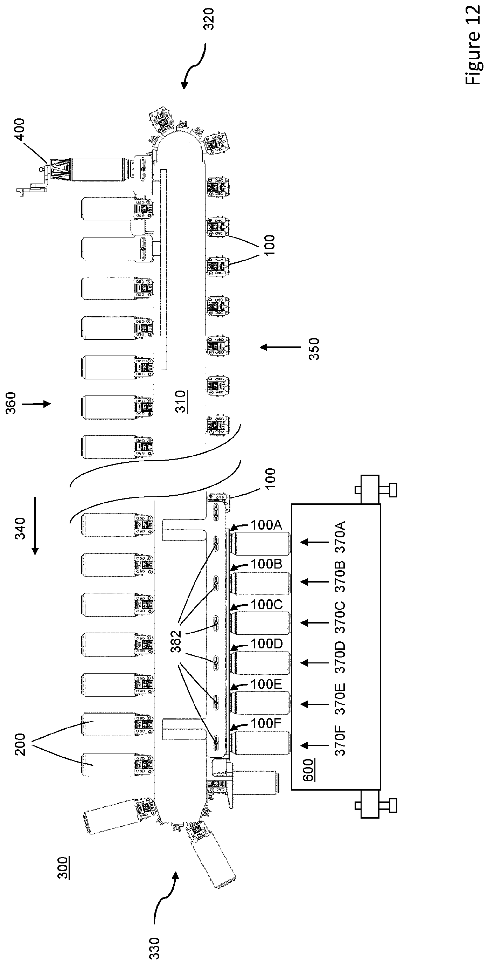

In a further example shown in Figure 12, the conveying apparatus 300 may be configured to unload simultaneously a plurality of objects 200 onto a further conveying means 600 that is wide enough to accommodate said plurality of objects 200 across its width. Examples of such wide conveying means are commonplace in the printing and processing industries, such as in conveyor ovens, for example. In this further example of Figure 12, a plurality of unloading stations 370A to 370F are arranged adjacent each other along the conveying path 340 on the underside 350 of the segment conveyor 310. The unloading stations 370A to 370F are spaced apart along the conveying path 340 by a spacing (i.e. distance) equal to the spacing that separates adjacent devices 100 attached to the segment conveyor 310. In this way, when one device 100A is present at a first unloading station 370A, the adjacent device 100B is present at a second adjacent unloading station 370B, etc. Each unloading station 370A to 370F comprises a "release" electromagnet 382 positioned on each side of the segment conveyor 310, which functions in the same way as the "release" magnet 380 described earlier in relation to the embodiment of Figures 7 and 10.

In this further example, however, the release electromagnets 382 are controlled to allow devices 100 carrying objects 200 to pass through the unloading stations 370A to 370F until all of the unloading stations 370A-370F are occupied by devices 100 carrying objects 200. At this stage, the electromagnets 382 of all of the unloading stations 370A to 370F are simultaneously energised to open the jaws 104, 106 of each of the devices 100A to 100F, causing each of the retained objects 200 to drop onto the further wide conveying means 600 below, after which the jaws 104, 106 of each of the plurality of devices 100A to 100F are returned to their closed positions.

The conveying path of the further ("wide") conveying means 600 shown in Figure 12 is substantially perpendicular to the conveying path 340 of the segment conveyor 310. Therefore, the objects 200 unloaded onto this further conveying means 600 form a row across its width perpendicular to the direction of its conveying path. The further conveying means 600 is controlled to move a distance in its conveying direction of at least the width of the objects 200 before the next intermittent movement of the segment conveyor 310, thus moving the line of objects 200 that have been unloaded from the conveying apparatus 300 clear of the path of the following objects 200 carried by the following devices 100 on the segment conveyor 310.

Such an arrangement provides for the transfer of objects 200 from a first, serial conveying means 300, wherein objects 200 are arranged one after another in series, to a second, "parallel" conveying means 600, wherein a plurality of objects 200 are arranged across the width of the second conveying means 600 in rows perpendicular to its conveying direction.

The segment conveyor 310 of this further example of a conveying apparatus 300 in Figure 12 is of greater length than the segment conveyor 310 in the example of a conveying apparatus 300 in Figure 10, which is to accommodate the additional unloading stations 370 described above. Indeed, the segment conveyor 310 (or any other type of suitable conveyor for use with the devices 100) may be configured to convey objects 200 over a larger distance between separately located equipment (for example from a printing apparatus to a curing oven) in an industrial process wherein the second end 330 is remote from the first end 320 of the segment conveyor 310. Hence Figure 12 depicts the first and second ends 320, 330 of the segment conveyor 310, without suggesting any limitation as to the length of the conveying path 340 therebetween.

Unlike a vacuum conveyor, a segment conveyor 310 comprising the devices 100 uses no energy to retain objects 200 and therefore, for example, such a conveying means comprising devices 100 can be more energy efficient than a vacuum conveyor, especially when conveying over larger distances.

The device 100 is suitable for additive manufacturing (AM) technology (i.e. 3D printing) by selective laser sintering (SLS), which uses a high power laser to sinter small particles of polymer powder into a solid structure based on a 3D model. This allows the manufacture of the device to be carried out for significantly less cost and time than, say, machining a block of material, such as aluminium. Furthermore, this method of manufacture allows for beneficial features such as the captive gates 122 in the main body 102 of the device 100, which facilitate the floating shaft 134 arrangement on which at least one of the pair of jaws 104, 106 is movably mounted. A computer program product may therefore be configured to encode 3D printing instructions to manufacture, using a 3D printer, and preferably via selective laser sintering, the device 100 according to a 3D model that defines the device 100 as described herein..

It will be appreciated that any feature of any embodiment described herein may be applied to another embodiment, in any appropriate combination. It will also be appreciated that particular combinations of the various features described and defined in any aspects described herein can be implemented and/or supplied and/or used independently. Any apparatus feature described herein may also be incorporated as a method feature, and vice versa.

While the forgoing is directed to exemplary embodiments of the present invention, it will be understood that the present invention is described herein purely by way of example, and modifications of detail can be made within the scope of the invention. Furthermore, one skilled in the art will understand that present invention may not be limited to the embodiments disclosed herein, or to any details shown in the accompanying figures that are not described in detail herein or defined in the claims. Indeed, such superfluous features may be removed from the figures without prejudice to the present invention.

Moreover, other and further embodiments of the invention will be apparent to those skilled in the art from consideration of the specification, and may be devised without departing from the basic scope thereof, which is determined by the claims that follow.

## Claims

1. A device for conveying an object, comprising:
a main body for receiving thereon an object to be conveyed, the main body being adapted for attachment to a conveying means configured to convey the object along a conveying path; and
a pair of opposing jaws mounted to the main body, the pair of jaws comprising a first jaw and a second jaw configured to releasably retain the object therebetween so as to retain the object on the main body;
wherein at least the first jaw is arranged to be movable relative to the second jaw between an open position, in which an object received on the main body is not retained by the pair of jaws, and a closed position, in which the pair of jaws retain the object; and
wherein at least the first jaw is releasably biased towards the closed position by releasable biasing means.

2. The device of claim 1, wherein at least the first jaw is arranged to be movable relative to the second jaw in a linear direction.

3. The device of claim 1 or 2, wherein at least the first jaw is arranged to be movable such that it is slidable relative to the second jaw.

4. The device of any preceding claim, wherein the pair of jaws are configured to retain on the main body an object having a rim or flange by engaging the object such that said rim or flange of the object rests on the main body between the pair of jaws and the main body.

5. The device of claim 4, wherein the pair of jaws are mounted on the main body with a gap between the pair of jaws and the main body such that the pair of jaws retain the rim or flange of the object within the gap without a clamping force being applied by the jaws to the object.

6. The device of any preceding claim, wherein the releasable biasing means comprises a first magnet located on at least the first jaw, and a second magnet located on the main body of the device, said first and second magnets arranged such that there is a magnetic attraction between the first and second magnets that releasably biases at least the first jaw towards the second magnet.

7. The device of any preceding claim, further comprising a mounting element configured to receive the object, the mounting element being mounted on the main body between the pair of jaws such that an object received by the mounting element is retained between the pair of jaws when they are in the closed position.

8. The device of any preceding claim, further comprising at least one shaft onto which at least the first jaw is slidably mounted via one or more support bearings, said at least one shaft being captive within the main body such that it is free to move within one or more bores that each extend at least partially through the main body.

9. The device of any preceding claim, wherein the second jaw is arranged to move relative to the first jaw.

10. An apparatus for conveying objects, comprising:
a device according to any preceding claim; and
conveying means configured to convey the object along a conveying path, wherein the conveying means is adapted to have releasably attached thereto one or more of said devices.

11. The apparatus of claim 10, wherein the conveying means is configured to change the orientation of the device, and with it the retained object, as it is conveyed along the conveying path.

12. The apparatus of claim 10 or 11, further comprising a third magnet positioned along the conveying path, the third magnet being configured to interact magnetically with the first magnet of at least the first jaw when the device is within a predetermined proximity of the third magnet.

13. The apparatus according to claim 12, wherein the third magnet is an electromagnet that is controllable to attract or repel the first magnet on at least the first jaw by controlling the direction of electrical current in the electromagnet.

14. The apparatus of any of claims 10 to 13, further comprising:
a loading station positioned along the conveying path, at which an object is loaded onto the device such that it is received by the device and retained thereon by movement of at least the first jaw to the closed position; and
an unloading station positioned further along the conveying path, at which the object is unloaded from the device by movement of at least the first jaw to the open position.

15. A computer program product encoding 3D printing instructions to manufacture, using a 3D printer, the device any of claims 1 to 9.
